# FASCICULE DE BREVET EUROPEEN

(11) **EP 1 900 992 B1**
(45) Date de publication et mention de la délivrance du brevet: **25.03.2009**
(21) Numéro de dépôt: 07291031.8
(22) Date de dépôt: 22.08.2007
(51) Int. Cl.: F16L 59/02, E04B 1/80

(54) **Elément d'isolation et revêtement du type formé d'au moins un élément du type précité**
Dämmelement und aus mindestens einem solchen Dämmelement hergestellte Verkleidung
Insulating element and covering made from at least one such element

(30) Priorité: 18.09.2006 FR 0608149
(43) Date de publication de la demande: 19.03.2008
(73) Titulaire: KdB Isolation, 44300 Nantes (FR)
(72) Inventeur: Delcroix, Guy, 75017 Paris (FR)
(74) Mandataire: Laget, Jean-Loup

(56) Documents cités:
- US-A- 3 313 073
- US-A- 3 386 218
- US-A- 5 086 599
- US-A- 5 293 728

## Description

La présente invention concerne un élément d'isolation polyfonctionnelle selon la revendication 1.

Un tel élément d'isolation est notamment utilisé dans le domaine du bâtiment pour l'isolation, en particulier thermique, de toiture, plancher, plafond ou autre et peut trouver des applications dans d'autres domaines que le bâtiment. Cet élément d'isolation, généralement conditionné en rouleaux, est posé sur la paroi à isoler en bandes parallèles voisines encore appelées lés. La pose s'effectue ainsi en fixant localement, par exemple par agrafage, cloutage ou vissage, un lé sur des tasseaux positionnés à intervalles réguliers sur une structure ou une paroi à recouvrir. Pour assurer l'étanchéité, en particulier à l'air, de la nappe d'isolant ainsi formée, il est préconisé de poser les bandes voisines à recouvrement partiel de sorte que leurs bords longitudinaux d'assemblage se chevauchent sur une faible largeur comprise en général entre 2 et 10 cm. Le raccord ou zone de jonction entre deux lés est ensuite recouvert par un ruban adhésif en un matériau conducteur et réfléchissant pour assurer la continuité électrique et la continuité de la réflectivité de ladite surface. La pose avec recouvrement s'est imposée sur le marché car la seule pose à bords jointifs avec adjonction d'une bande autocollante de liaison ne permet pas à ce jour de garantir de manière certaine l'étanchéité de la nappe formée. Cependant, la pose avec recouvrement engendre un inconvénient. En effet, elle réduit la performance d'isolation de la paroi dans la mesure où elle crée un pont thermique à chaque raccord. Par convention, on appellera, dans la présente demande de brevet, la feuille de revêtement isolant de l'élément d'isolation qui n'est pas destinée à être tournée vers la structure de la paroi à recouvrir : feuille de revêtement extérieur, tandis que la feuille de revêtement qui est destinée à être tournée vers la structure de la paroi à couvrir sera appelée feuille de revêtement intérieur.

Le pont thermique résulte du recouvrement qui met en contact une feuille de revêtement extérieur en matériau réfléchissant de l'un des lés avec la feuille de revêtement intérieur d'un autre lé sur toute la largeur de la bande de recouvrement. Cette solution n'est pas satisfaisante.

Pour résoudre un tel problème, il a été imaginé, comme l'illustrent en particulier les brevets FR-2.854.940 et FR-2.878.609, de développer un élément d'isolation dont les feuilles de revêtement sont de dimension différente et décalées l'une par rapport à l'autre de manière à mettre à nu, sur l'une des faces de l'élément, une zone non conductrice de sorte que, lors du recouvrement, la formation de pont thermique est évitée.

Toutefois, on retrouve dans de tels documents l'inconvénient majeur de la pose à recouvrement qui nécessite d'utiliser en supplément l'adjonction d'une bande autocollante de liaison au niveau du raccord des lés entre eux.

On connaît également, à travers le brevet FR-2.847.651, un élément d'isolation qui comporte, dans le prolongement de l'une de ses surfaces de revêtement, une bande de revêtement destinée à venir à recouvrement d'un élément d'isolation similaire adjacent. Cette solution présente un certain nombre d'inconvénients. En particulier, la juxtaposition des lés n'est pas efficace sur le plan thermique car l'épaisseur du film de couverture ne constitue pas une barrière suffisamment isolante dans la zone de juxtaposition. Seul un recouvrement partiel ou total permet de réduire cette rupture ou faiblesse d'isolation.

On connaît également à travers les documents US 3 313 073, US 5086 599, US 3 386218 et US 5 293 728 des éléments d'isolation polyfonctionnelle rigides se présentant sous forme de panneaux.

Un but de la présente invention est donc de proposer un élément d'isolation dont la conception permet, à l'état assemblé à recouvrement partiel de l'élément d'isolation avec un élément d'isolation adjacent similaire, de s'affranchir de la pose d'un ruban adhésif en matériau conducteur et réfléchissant, ce ruban venant recouvrir le raccord entre éléments d'isolation pour garantir une étanchéité de la nappe formée.

Un autre but de la présente invention est de proposer un élément d'isolation dont la conception permet, à l'état assemblé à recouvrement partiel de l'élément d'isolation avec un élément d'isolation adjacent similaire, d'éviter la formation d'un pont thermique au niveau du raccord.

Un autre but de la présente invention est de proposer un élément d'isolation dont la conception permet, à l'état assemblé à recouvrement partiel de l'élément d'isolation avec un élément d'isolation adjacent similaire, de réduire l'épaisseur dans la zone de raccord desdits éléments entre eux par rapport à un recouvrement par simple juxtaposition desdits éléments entre eux.

Un autre but de la présente invention est d'obtenir un élément d'isolation dont la conception permet, à l'état assemblé à recouvrement partiel de l'élément d'isolation avec un élément d'isolation adjacent similaire, d'obtenir une nappe d'épaisseur constante et non avec un profil en escalier comme l'illustre la pose à recouvrement par simple juxtaposition de l'état de la technique.

A cet effet, l'invention a pour objet un élément d'isolation polyfonctionnelle selon la revendication 1.

La conception de l'élément d'isolation amène à procéder, pour l'assemblage dudit élément avec un élément similaire adjacent, par recouvrement partiel des bords desdits éléments associé à un emboîtement desdits bords. Il en résulte au final l'obtention d'un raccord dont l'étanchéité tant à l'air qu'à l'eau est améliorée par rapport aux solutions décrites dans l'état de la technique. En outre, la conception de l'élément d'isolation permet de s'affranchir de la bande adhésive en matériau conducteur et réfléchissant qui venait jusqu'à présent recouvrir le raccord entre éléments dans l'état de la technique du fait de la chicane formée au niveau de la zone de jonction desdits éléments entre eux grâce à la présence de la gorge. On obtient ainsi un élément d'isolation polyfonctionnelle dont la conception permet d'éviter la formation de pont thermique, de s'affranchir de la bande de recouvrement décrite ci-dessus, d'assurer une continuité électrique entre éléments d'isolation, d'améliorer les propriétés d'étanchéité d'un tel raccord, sans accroître l'épaisseur du raccord. Il doit être noté que par continuité électrique ou thermique, on entend la propriété de ces éléments de conduire l'électricité ou la chaleur, en particulier en surface, d'un élément à un autre par contact entre ces éléments.

Selon l'invention, chaque flanc de la gorge est formé par la feuille de revêtement de l'une des faces dudit élément. En d'autres termes, l'un des flancs de la gorge est formé par une feuille de revêtement de l'élément d'isolation, telle que la feuille de revêtement intérieur, tandis que l'autre flanc de la gorge est formé par l'autre feuille de revêtement ou feuille de revêtement opposée, telle que la feuille de revêtement extérieur. Dans ce cas, les feuilles de revêtement de l'élément 1 d'isolation prennent en sandwich le bord d'assemblage d'un élément d'isolation similaire adjacent à l'état assemblé desdits éléments.

Indépendamment du mode de réalisation retenu, le fond de gorge peut présenter un profil droit ou étagé, en particulier crénelé ou en escalier.

L'élément d'isolation comporte au moins deux bords d'assemblage longitudinaux libres parallèles et au moins deux zones d'assemblage à un élément d'isolation similaire adjacent disposées chacune au voisinage d'un bord d'assemblage longitudinal, la tranche de l'élément d'isolation s'étendant le long du bord d'assemblage longitudinal de l'une des zones d'assemblage présente un profil de forme complémentaire de la tranche de l'élément d'isolation s'étendant le long du bord d'assemblage longitudinal de la zone d'assemblage opposée.

Indépendamment du nombre de zones d'assemblage de l'élément d'isolation, au moins l'une des zones d'assemblage de l'élément d'isolation à un élément d'isolation similaire adjacent est munie d'au moins une bande autocollante à revêtement pelable, cette bande, d'axe parallèle au bord longitudinal d'assemblage de ladite zone et reliant deux bords transversaux opposés de l'élément d'isolation, servant à l'assemblage à recouvrement partiel de l'élément à un élément d'isolation adjacent similaire.

Dans un mode de réalisation particulier, la ou au moins une bande autocollante à revêtement pelable comporte une échelle de mesure. Cette échelle de mesure facilite la découpe de l'élément en tronçons de bande.

Selon une autre caractéristique de l'invention, les feuilles de revêtement thermiquement conductrices et l'âme sont réunies entre elles par des lignes d'assemblage, dites longitudinales, chaque zone d'assemblage s'étendant entre un bord longitudinal libre de l'élément d'isolation et une ligne d'assemblage dudit élément.

L'âme est généralement formée d'une pluralité de couches de matière adhérées par leur face en regard ou séparées par une lame d'air.

L'âme comprend par exemple au moins deux couches de matière synthétique à bulles entre lesquelles peut être interposée une couche de mousse en matière synthétique, de préférence ignifugée.

Il est à noter que par couche de matière synthétique à bulles, on entend un produit constitué par deux feuilles de matière synthétique thermo-soudées dont l'une est thermoformée et comporte des alvéoles et dont l'autre est plane pour fermer les alvéoles et former les bulles. Les feuilles de revêtement thermiquement conductrices sont quant à elles avantageusement réalisées sous forme de feuilles d'aluminium ou de feuilles plastiques métallisées.

L'invention a également pour objet un revêtement isolant du type formé d'au moins deux éléments d'isolation polyfonctionnelle du type précité, caractérisé en ce que lesdits éléments d'isolation sont assemblés l'un à l'autre par un assemblage à recouvrement partiel à emboîtement.

L'invention sera bien comprise à la lecture de la description suivante d'exemples de réalisation, en référence aux dessins annexés dans lesquels :
la figure 1 représente une vue de dessus d'un élément d'isolation polyfonctionnelle ;
la figure 2 représente une vue en coupe transversale d'un premier mode de réalisation d'un élément d'isolation polyfonctionnelle ;
la figure 3 représente une vue en coupe transversale d'un autre mode de réalisation d'un élément d'isolation polyfonctionnelle sous forme de lé ;
la figure 4 représente une vue en coupe transversale d'un autre mode de réalisation d'un élément d'isolation polyfonctionnelle sous forme de lé ;
la figure 5 représente une vue en coupe transversale d'un autre mode de réalisation d'un élément d'isolation polyfonctionnelle sous forme de lé ;
la figure 6 représente une vue en coupe de deux éléments d'isolation polyfonctionnelle conformes à la figure 4 avant assemblage desdits lés entre eux et
la figure 7 représente une vue en coupe transversale des éléments d'isolation de la figure 6 à l'état assemblé.

L'élément 1 d'isolation polyfonctionnelle, en particulier thermique, objet de l'invention, se présente généralement en plaque ou en bande. Cet élément 1 est généralement conditionné en rouleau puis découpé pour former une bande ou lé. Cet élément d'isolation comporte, de manière générale, deux feuilles 19, 20 de revêtement en un matériau conducteur et réfléchissant, tel qu'un revêtement métallique ou métallisé, entre lesquelles est disposée une âme 16 en matériau isolant. Par matériau réfléchissant, on entend un matériau dont l'émissivité est faible, généralement inférieure à 0,7. L'âme 16 est, dans les exemples représentés, formée à chaque fois d'une pluralité de couches 17, 18 de matière séparées ou non par une lame d'air. Ainsi, l'âme 16 comprend dans les figures au moins deux couches 17 de matière synthétique à bulles entre lesquelles est interposée une couche 18 de mousse en matière synthétique, de préférence ignifugée. Les feuilles 19, 20 de revêtement thermique conductrices et réfléchissantes sont quant à elles formées chacune d'une couche d'aluminium ou de matériau aluminisé, soudée à chaud sur la face externe d'une couche 17 de matière synthétique à bulles de l'âme 16. L'âme 16 et les feuilles 19, 20 de revêtement sont réunies à l'état superposé par des moyens de liaison appropriés. Comme mentionné ci-dessous, dans l'une de ses présentations, l'élément 1 d'isolation est un élément souple ou flexible déformable pour pouvoir être conditionné en rouleau.

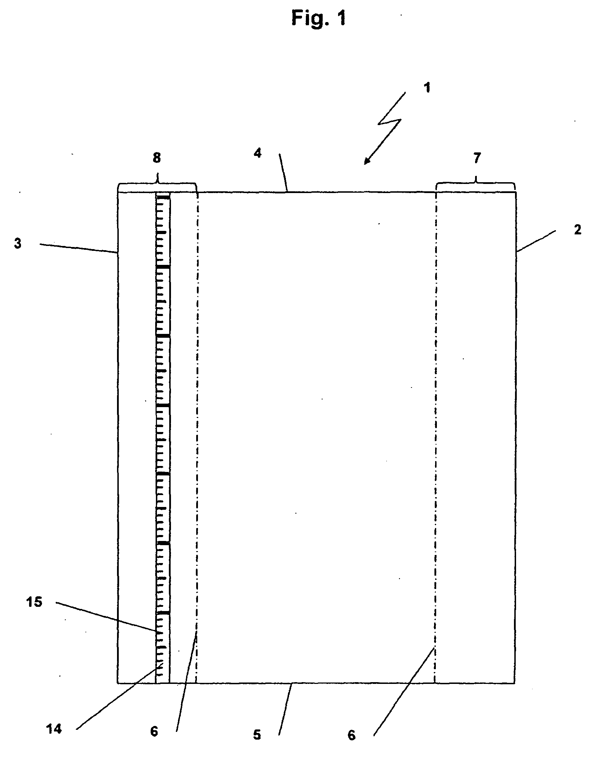

Dans les exemples représentés, les feuilles 19, 20 de revêtement thermiquement conducteur et l'âme 16 sont réunies entre elles par des lignes 6 d'assemblage, dites longitudinales, formées en l'occurrence par des lignes de soudure. Ces lignes sont plus particulièrement visibles à la figure 1. L'élément 1 d'isolation ainsi réalisé comprend donc quatre bords, représentés en 2 à 5 aux figures. Il comporte deux bords d'assemblage dits bords d'assemblage longitudinaux à au moins un élément 1' similaire adjacent et deux bords 4, 5, dits transversaux, car s'étendant transversalement auxdits bords d'assemblage longitudinaux.

Par convention, on entend par bord d'assemblage longitudinal, le bord destiné à être assemblé par une liaison à recouvrement partiel avec un élément 1 similaire adjacent. Ainsi, comme l'illustre la figure 1, l'élément 1 d'isolation comporte donc deux bords 2, 3 d'assemblage longitudinaux pouvant encore être appelés bords de recouvrement ménagés l'un dans une zone d'assemblage, représentée en 7 aux figures, l'autre 3 dans une zone d'assemblage, représentée en 8 aux figures, et deux bords transversaux auxdits bords longitudinaux représentés respectivement en 4 et 5 aux figures. Le bord 2 d'assemblage longitudinal et la ligne 6 d'assemblage la plus proche de ce bord délimitent entre eux la zone 7 d'assemblage tandis que le bord 3 longitudinal d'assemblage et la ligne 6 d'assemblage de l'âme 16 et des feuilles 19 de revêtement la plus proche dudit bord délimitent entre eux la zone 8 d'assemblage. Ainsi, l'élément 1 d'isolation comporte deux zones 7, 8 d'assemblage.

De manière caractéristique à l'invention, dans au moins l'une 7 des zones 7, 8 d'assemblage de l'élément 1 d'isolation à un élément 1' d'isolation similaire adjacent, la tranche 21 de l'élément 1 d'isolation s'étendant le long du bord 2 d'assemblage longitudinal comporte au moins une gorge 10, dite longitudinale continue, s'étendant d'un bord 4 transversal dudit élément 1 d'isolation au bord 5 transversal opposé. Cette gorge 10 est ouverte à chacune de ses extrémités et présente un axe longitudinal parallèle au bord 2 d'assemblage longitudinal. Cette gorge forme ainsi un logement pour la réception d'au moins une partie du bord 2' d'assemblage d'un élément 1' d'isolation similaire adjacent, cette partie de bord étant prise dans l'épaisseur dudit bord 2' pour un assemblage à recouvrement par emboîtement. Enfin, au moins l'un 12 des flancs 12, 13 de la gorge 10 est formé par une partie de la feuille 19 de revêtement de l'une des faces dudit élément 1 d'isolation en vue d'assurer une continuité électrique et thermique d'un élément 1 d'isolation à un autre élément 1' d'isolation à l'état assemblé desdits éléments 1, 1'.

La gorge 10 décrite ci-dessus est à chaque fois obtenue grâce au fait que, de manière générale et en particulier, dans les zones 7, 8, l'âme 16 de l'élément 1 est de largeur inférieure à la largeur des feuilles de revêtement de l'élément. Ces feuilles de revêtement sont de dimension identique et sont disposées avec leurs bords en regard.

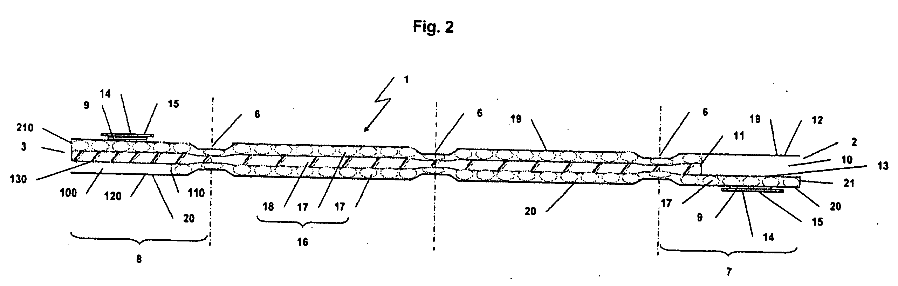

Un exemple de gorge 10 est plus particulièrement visible à la figure 2. Dans cette figure 2, l'un des flancs 12 de la gorge 10 est formé par la face interne de la feuille de revêtement 19 tandis que l'autre flanc est formé par une couche 17 de matière synthétique à bulles de l'âme, accolée à la face interne de la feuille 20 de revêtement. Ce second flanc de gorge est représenté en 13 aux figures. Le fond 11 de gorge est constitué quant à lui par les bords libres de l'autre couche 17 de matière synthétique à bulles et de la couche 18 de mousse dont les bords longitudinaux s'étendent en retrait du bord longitudinal d'assemblage des feuilles 19 et 20 de revêtement. Il doit être noté que dans tous les modes de réalisation décrits, les feuilles 19 et 20 de revêtement présentent les mêmes dimensions et sont superposées l'une à l'autre sans décalage au niveau de leurs bords de telle sorte que leurs bords sont dits alignés.

Par convention, dans tout ce qui suit, la feuille 19 de revêtement, correspondant à la feuille de l'élément 1 d'isolation tournée vers la surface à isoler, sera appelée feuille de revêtement extérieur tandis que la feuille 20 de revêtement non tournée vers la surface à revêtir sera appelée feuille de revêtement intérieur dudit élément 1 d'isolation.

Dans la figure 2, la zone d'assemblage de l'élément 1 d'isolation, représentée en 8 aux figures, comporte, de manière analogue à la zone 7 d'assemblage parallèle et opposée, une gorge 100 dont les flancs sont représentés en 120 et 130 à ladite figure, l'un des flancs 120 étant constitué par la face interne de la feuille 20 de revêtement intérieur tandis que l'autre flanc de ladite gorge, représenté en 130, est formé par une face de la couche 18 de mousse de l'âme. Dans cette zone 8 d'assemblage, seule la couche 17 de film à bulles jouxtant la feuille 120 de revêtement intérieur est ménagée en retrait du bord 3 longitudinal libre d'assemblage dudit élément et constitue, par son bord longitudinal libre, le fond 110 de ladite gorge 100 ainsi réalisée. Dans ce mode de réalisation, l'élément 1 d'isolation comporte deux zones 7, 8 d'assemblage et une gorge 10, 100 dans chacune de ses zones d'assemblage. Le flanc 12, 120 de la gorge 10, 100, formé par la feuille de revêtement de l'une des faces dudit élément d'isolation est, dans l'une des zones d'assemblage, formé par la feuille 20 de revêtement intérieur et dans l'autre zone, par la feuille 19 de revêtement extérieur. La tranche 21 de l'élément 1 d'isolation s'étendant le long du bord 2 d'assemblage longitudinal de l'une 7 des zones 7, 8 d'assemblage présente un profil de forme complémentaire de la tranche 210 de l'élément 1 d'isolation s'étendant le long du bord 3 d'assemblage longitudinal de la zone 8 d'assemblage opposée pour permettre, lors de l'assemblage de deux éléments d'isolation similaires entre eux, un assemblage à recouvrement partiel à emboîtement, la gorge 10 venant prendre en sandwich, par ses flancs, la feuille 19 de revêtement extérieur, la couche 17 à bulles accolée à ladite feuille 19 de revêtement extérieur et la couche 18 de mousse du bord d'assemblage d'un élément similaire adjacent, tandis que la feuille de revêtement intérieur de l'élément 1' similaire adjacent vient à recouvrement de la feuille 20 de revêtement intérieur du bord d'assemblage de l'élément 1 d'isolation. Le raccord ainsi formé permet de ménager une chicane garantissant une étanchéité tant à l'air qu'à l'eau à l'état solidarisé des différentes couches entre elles. Pour permettre cette solidarisation, l'élément 1 d'isolation est pourvu, dans au moins l'une de ses zones d'assemblage à un élément 1' d'isolation similaire adjacent, d'au moins une bande 9 adhésive à revêtement 14 pelable. Cette bande 9 est d'axe parallèle au bord 2 longitudinal d'assemblage de ladite zone et relie deux bords 4, 5 transversaux opposés de l'élément 1 d'isolation. Cette bande sert à l'assemblage à recouvrement partiel de l'élément 1 à un élément 1' d'isolation adjacent similaire.

Dans l'exemple représenté à la figure 2, chaque zone d'assemblage de l'élément 1 d'isolation comporte une bande 9 adhésive à revêtement 14 pelable. L'une des bandes est portée par la face externe de la feuille 19 de revêtement s'étendant dans la zone 8 d'assemblage extérieur tandis que l'autre bande est portée par la face externe de la feuille 20 de revêtement intérieur s'étendant dans la zone 7 d'assemblage. Il aurait également pu être prévu, de manière équivalente, de disposer les deux bandes adhésives à revêtement pelable dans la même zone d'assemblage. Ainsi, les deux bandes adhésives auraient pu être positionnées dans la zone 7 d'assemblage, l'une des bandes, telle que représentée, sur la face externe de la feuille 20 de revêtement intérieur, l'autre étant positionnée sur la face interne de la feuille 19 de revêtement extérieur au niveau du flanc 12 de ladite gorge 10.

Il doit être rappelé, comme cela a été mentionné ci-dessus, qu'au moins l'un des flancs d'au moins l'une des gorges doit être formé par la feuille de revêtement de l'une des faces dudit élément d'isolation en vue d'assurer par contact avec la feuille de revêtement d'un élément 1' d'isolation similaire adjacent une continuité électrique et thermique. Ce flanc peut donc être muni intérieurement, sur une partie de sa surface, d'une bande 9 adhésive, mais cette bande ne vient pas recouvrir la totalité de la surface du flanc pour permettre la mise en contact de cette face du flanc avec la face externe de la feuille de revêtement d'un élément l'adjacent.

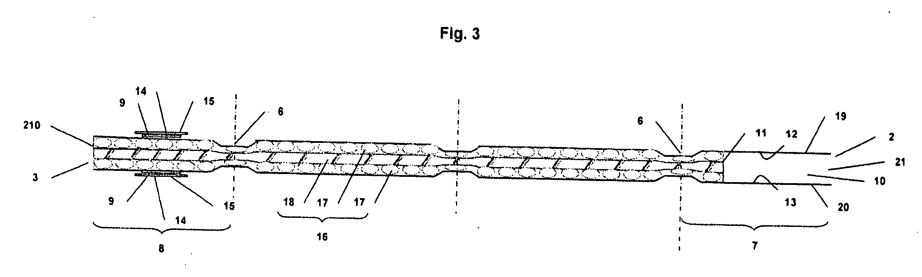

Dans le mode de réalisation de la figure 2, on note que le fond de la gorge présente, dans chacune des zones d'assemblage, un profil droit. Ce fond s'étend dans ce cas dans un plan sensiblement parallèle au bord longitudinal d'assemblage des feuilles 19 et 20 de revêtement. L'exemple de la figure 3 se distingue de celui de la figure 2 par le fait que l'élément 1 d'isolation comporte ici une seule gorge dans une seule zone 7 d'assemblage, l'autre zone d'assemblage étant dépourvue de gorge. La gorge représentée en 10 à la figure 3 est ainsi formée par l'espace laissé libre entre les deux feuilles 19 et 20 de revêtement dans la zone 7 d'assemblage au voisinage du bord 2 d'assemblage longitudinal libre dudit élément 1 d'isolation. Pour permettre de ménager cette gorge, l'âme 6 s'étend en retrait dudit bord 2 longitudinal libre, le bord longitudinal de cette âme 6 constituant le fond 11 de ladite gorge.

A l'état assemblé d'un tel élément 1 d'isolation avec un élément 1' similaire adjacent, les feuilles 19 et 20 de revêtement viennent prendre en sandwich le bord d'assemblage d'un élément 1' d'isolation similaire adjacent. Ainsi, la feuille 19 de revêtement extérieur vient, par sa face interne, s'appliquer contre la face externe de la feuille de revêtement extérieure de l'élément 1' adjacent similaire tandis que la feuille 20 de revêtement intérieur de l'élément 1 reçoit en applique la face interne de la feuille de revêtement intérieur de l'élément 1' d'isolation adjacent. Pour permettre une solidarisation desdits éléments entre eux, il est à nouveau prévu des bandes 9 adhésives à revêtement 14 pelable qui assurent une liaison étanche entre éléments.

Dans le mode de réalisation représenté à la figure 3, les bandes adhésives à revêtement 14 pelable sont disposées dans la zone 8 d'assemblage exempte de gorge sur les faces externes des feuilles 19, 20 de revêtement. Elles auraient pu, de manière équivalente, être positionnées dans la zone d'assemblage de l'élément 1 d'isolation comportant une gorge sur les faces internes desdites feuilles de revêtement.

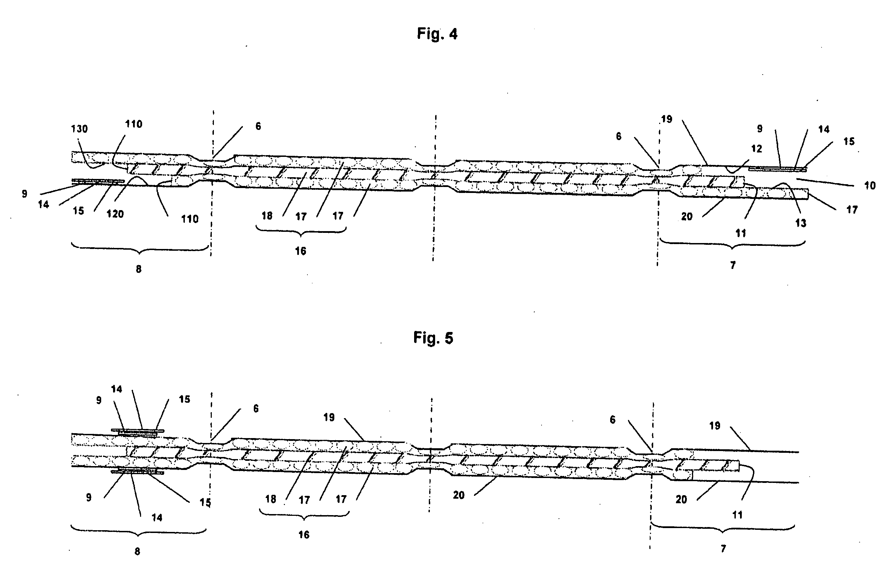

La figure 4 illustre un autre mode de réalisation d'un élément 1 d'isolation conforme à l'invention dans lequel l'élément 1 d'isolation se distingue de celui représenté à la figure 2 uniquement par le profil du fond 11, 10 de gorge qui affecte la forme d'un escalier. Ainsi, cet élément 1 d'isolation comporte, dans chacune de ses zones d'assemblage, au moins une gorge ménagée grâce au fait que la couche 18 de mousse et l'une des couches 17 de film à bulles synthétique sont ménagées en retrait du bord longitudinal d'assemblage libre dudit élément 1 d'isolation. Le profil en escalier est obtenu par un décalage au niveau du retrait.

Dans ce mode de réalisation, les bandes 9 adhésives à revêtement 14 pelable sont positionnées sur la face interne de la feuille de revêtement formant un flanc de gorge dans chacune des zones d'assemblage.

La pose de tels lés est identique à celle décrite pour la figure 2.

La figure 5 illustre encore un autre mode de réalisation d'un élément 1 d'isolation dans lequel la gorge 10 de la zone 7 d'assemblage est à nouveau ménagée par un positionnement en retrait de l'âme 16 par rapport au bord longitudinal libre de l'élément 1 d'isolation et en particulier aux bords longitudinaux libres des feuilles de revêtement.

Au niveau du fond 11 de la gorge ainsi constituée, la couche 18 de mousse de l'âme 16 s'étend en saillie des couches 17 à bulles pour former, dans le fond de ladite gorge, une languette longitudinale continue qui est prise en sandwich par les couches à bulles de l'âme s'étendant dans la zone d'assemblage d'un élément 1' d'isolation similaire adjacent à l'état assemblé desdits éléments.

A nouveau, dans ce mode de réalisation, les feuilles 19 et 20 de revêtement prennent en sandwich le bord d'assemblage de l'élément 1' d'isolation similaire adjacent en venant s'appliquer pour la feuille 19 de revêtement extérieur sur la face externe de la feuille de revêtement extérieur de l'élément 1' et pour la feuille 20 de revêtement intérieur par sa face interne sur la face externe de la feuille de revêtement intérieure de l'élément 1' d'isolation similaire adjacent. On obtient ainsi à nouveau un assemblage à recouvrement partiel à emboîtement desdits éléments 1, 1' d'isolation entre eux au niveau de leur zone d'assemblage.

L'ensemble des exemples représentés ci-dessus montre que, de manière équivalente, l'élément 1 d'isolation peut comporter une gorge dans chacune de ses zones d'assemblage délimitées chacune par un bord d'assemblage longitudinal ou dans une seule des deux zones d'assemblage, délimitée par un bord d'assemblage longitudinal. Les exemples illustrent également que les flancs de la gorge sont à chaque fois formés pour l'un, par une feuille de revêtement dudit élément, pour l'autre, par la feuille de revêtement opposée dudit revêtement revêtue ou non de couches de l'âme. Enfin, le fond de la gorge peut présenter des profils différents suivant la largeur des différentes couches constitutives de l'âme et de leur positionnement en retrait par rapport au bord d'assemblage longitudinal libre desdites feuilles de revêtement. Il en résulte un grand nombre de modes de réalisation de l'invention.

Enfin, dans un mode de réalisation particulier de l'invention, la ou au moins une bande 9 adhésive à revêtement 14 pelable de l'élément 1 d'isolation comporte une échelle 15 de mesure. Cette échelle permet à l'opérateur un repérage aisé de la longueur de bande à découper et une lecture directe de la mesure.

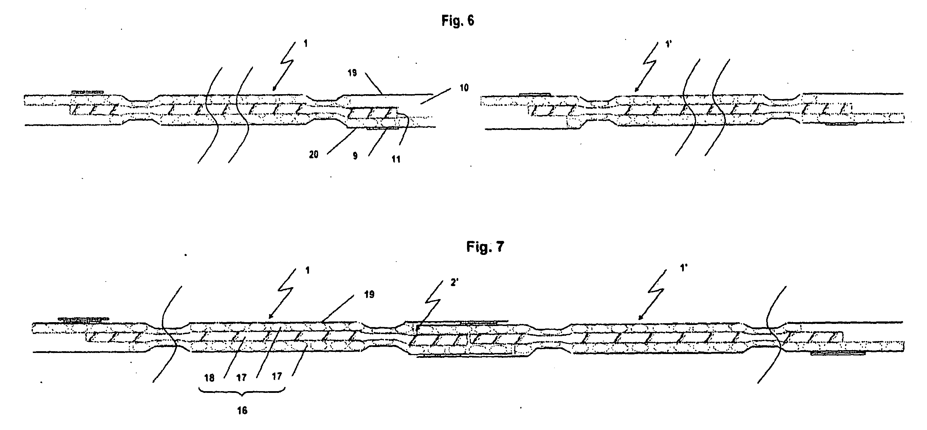

Comme l'illustre la figure 7, la création de pont thermique est, à l'état assemblé de l'élément 1 d'isolation avec un élément 1' d'isolation similaire adjacent, évitée du fait qu'à chaque fois, la feuille de revêtement, par exemple extérieure de l'élément 1 d'isolation, est en contact avec la feuille de revêtement extérieur de l'élément 1' d'isolation. Il n'existe plus de possibilité, comme dans l'état de la technique, d'un contact par exemple de la feuille de revêtement extérieur de l'élément 1 d'isolation avec la feuille de revêtement intérieur de l'élément 1' d'isolation similaire adjacent.

Pour permettre la pose et l'assemblage des éléments d'isolation représentés aux figures 6 et 7, il suffit dans un premier temps de fixer à la surface à isoler l'élément 1 d'isolation puis d'engager le bord d'assemblage de l'élément 1' d'isolation adjacent dans la gorge 10 du premier élément après avoir décollé le revêtement pelable des bandes disposées dans les zones d'assemblage des éléments 1 et 1'. Une partie du bord d'assemblage de l'élément 1' d'isolation, constituée par la feuille de revêtement extérieure, une couche de film à bulles et une couche 18 de mousse, vient s'insérer entre les flancs de la gorge, tandis que la feuille de revêtement intérieur de l'élément 1' d'isolation adjacent vient à recouvrement de la feuille de revêtement intérieur de l'élément 1 d'isolation. On obtient ainsi une liaison avec à la fois un recouvrement partiel et un emboîtement des parties constitutives desdits bords d'assemblage entre elles.

## Revendications

1. Elément (1) d'isolation polyfonctionnelle, en particulier thermique, se présentant notamment en plaque ou en bande, cet élément (1), destiné à être assemblé par au moins l'un (2, 3) de ses bords (2, 3, 4, 5), dit bord (2, 3) d'assemblage longitudinal, à au moins un élément (1') similaire par recouvrement partiel, étant formé de deux feuilles (19, 20) de revêtement en un matériau conducteur et réfléchissant, tel qu'un revêtement métallique ou métallisé, entre lesquelles est disposée une âme (16) en matériau isolant, âme (16) et feuilles (19, 20) de revêtement étant réunies à l'état superposé par des moyens de liaison appropriés,
et, dans au moins l'une (7) des zones (7, 8) d'assemblage de l'élément (1) d'isolation à un élément (1') d'isolation similaire adjacent, la tranche (21) de l'élément (1) d'isolation s'étendant le long du bord (2) d'assemblage longitudinal comporte au moins une gorge (10), dite longitudinale continue, s'étendant d'un bord (4) transversal dudit élément (1) d'isolation au bord (5) transversal opposé, cette gorge (10), ouverte à chacune de ses extrémités et d'axe longitudinal parallèle au bord (2) d'assemblage longitudinal, formant un logement de réception d'au moins une partie du bord (2') d'assemblage dudit élément (1') d'isolation similaire adjacent, prise dans l'épaisseur dudit bord (2'), pour un assemblage à recouvrement par emboîtement, au moins l'un (12) des flancs (12, 13) de la gorge (10) étant formé par la feuille (19) de revêtement de l'une des faces dudit élément (1) d'isolation en vue d'assurer une continuité électrique et thermique entre éléments (1, 1') d'isolation à l'état assemblé desdits éléments (1, 1'),
**caractérisé en ce qu'**au moins l'une (7) des zones (7, 8) d'assemblage de l'élément (1) d'isolation à un élément (1') d'isolation similaire adjacent est munie d'au moins une bande (9) adhésive à revêtement (14) pelable, cette bande (9) d'axe parallèle au bord (2) longitudinal d'assemblage de ladite zone (7) et reliant deux bords (4, 5) transversaux opposés de l'élément (1) d'isolation servant à l'assemblage à recouvrement partiel de l'élément (1) à un élément (1') d'isolation adjacent similaire.

2. Elément (1) d'isolation polyfonctionnelle selon la revendication 1,
**caractérisé en ce que** chaque flanc (12, 13) de la gorge (10) est formé par la feuille (19, 20) de revêtement de l'une des faces dudit élément (1)

3. Elément (1) d'isolation polyfonctionnelle selon la revendication 1,
**caractérisé en ce que** le fond (11) de gorge (10) présente un profil droit ou étagé, en particulier crénelé ou en escalier.

4. Elément (1) d'isolation polyfonctionnelle selon la revendication 1, du type dans lequel l'élément (1) d'isolation comporte au moins deux bords (2, 3) d'assemblage longitudinaux libres parallèles et au moins deux zones (7, 8) d'assemblage à un élément (1') d'isolation similaire adjacent disposées chacune au voisinage d'un bord (2, 3) d'assemblage longitudinal,
**caractérisé en ce que** la tranche (21) de l'élément (1) d'isolation s'étendant le long du bord (2) d'assemblage longitudinal de l'une (7) des zones (7, 8) d'assemblage présente un profil de forme complémentaire de la tranche (21) de l'élément (1) d'isolation s'étendant le long du bord (3) d'assemblage longitudinal de la zone (8) d'assemblage opposée.

5. Elément (1) d'isolation polyfonctionnelle selon l'une des revendications 1 à 4,
**caractérisé en ce que** la ou au moins une bande (9) adhésive à revêtement (14) pelable comporte une échelle (15) de mesure.

6. Elément (1) d'isolation polyfonctionnelle selon l'une des revendications 1 à 5,
**caractérisé en ce que** les feuilles (19, 20) de revêtement thermiquement conductrices et l'âme (16) sont réunies entre elles par des lignes (6) d'assemblage, dites longitudinales, chaque zone (7, 8) d'assemblage s'étendant entre un bord (2, 3) longitudinal libre de l'élément (1) d'isolation et une ligne (6) d'assemblage dudit élément (1).

7. Elément (1) d'isolation polyfonctionnelle selon l'une des revendications 1 à 5,
**caractérisé en ce que** l'âme (16) est formée d'une pluralité de couches (17, 18) de matière adhérées par leur face en regard ou séparées par une lame d'air.

8. Elément (1) d'isolation polyfonctionnelle selon la revendication 7,
**caractérisé en ce que** l'âme (16) comprend au moins deux couches (17) de matière synthétique à bulles entre lesquelles peut être interposée une couche (18) de mousse en matière synthétique, de préférence ignifugée.

9. Revêtement isolant du type formé d'au moins deux éléments d'isolation polyfonctionnelle conformes à l'une des revendications 1 à 8,
**caractérisé en ce que** lesdits éléments (1) d'isolation sont assemblés l'un à l'autre par un assemblage à recouvrement partiel à emboîtement.

## Claims

1. Poly-functional, particularly thermal, insulation element (1), existing particularly in board or strip form, this element (1), intended for being assembled, through at least one (2 and 3) of its edges (2, 3, 4 and 5), called longitudinal assembly edge (2 and 3), with at least one similar element (1') by means of partial overlap, being formed from two covering sheets (19 and 20) made of a conducting, reflective material such as a metal or metallized covering, between which is arranged a core (16) made of an insulating material, the core (16) and covering sheets (19 and 20) being joined together in the superimposed state by appropriate means of connection and, in at least one (7) of the areas (7 and 8) of assembly of the insulation element (1) with a similar adjacent insulation element (1'), the section (21) of the insulation element (1) running along the longitudinal assembly edge (2) comprises at least one recess (10), called a continuous longitudinal recess, running from one transverse edge (4) of the said insulation element (1) to the opposite transverse edge (5), this recess (10), open at each of its ends and having a longitudinal axis parallel with the longitudinal assembly edge (2), forming a housing to receive at least part of the edge (2') of assembly of the said similar adjacent insulation element (1'), within the thickness of the said edge (2'), for overlap assembly by nesting, at least one (12) of the sides (12 and 13) of the recess (10) being formed by the sheet (19) for covering one of the faces of the said insulation element (1) for the purpose of ensuring electrical and thermal continuity between insulation elements (1 and 1') in the assembled state of the said elements (1 and 1'), **characterized in that** at least one (7) of the areas (7 and 8) of assembly of the insulation element (1) with a similar adjacent insulation element (1') is provided with at least one adhesive strip (9) with peelable covering (14), this strip (9) having an axis parallel with the longitudinal assembly edge (2) of the said area (7) and connecting two opposite transverse edges (4 and 5) of the insulation element (1) serving for the partial overlap assembly of the element (1) with a similar adjacent insulation element (1').

2. Poly-functional insulation element (1) according to Claim 1, **characterized in that** each side (12 and 13) of the recess (10) is formed by the covering sheet (19 and 20) of one of the faces of the said element (1).

3. Poly-functional insulation element (1) according to Claim 1, **characterized in that** the bottom (11) of the recess (10) has a straight or tiered profile, in particular one which is crenellated or stepped.

4. Poly-functional insulation element (1) according to Claim 1, of the type in which the insulation element (1) comprises at least two free, parallel longitudinal assembly edges (2 and 3) and at least two areas (7 and 8) of assembly with a similar adjacent insulation element (1'), each arranged in the vicinity of a longitudinal assembly edge (2 and 3), **characterized in that** the section (21) of the insulation element (1) running along the longitudinal assembly edge (2) of one (7) of the assembly areas (7 and 8) has a profile of a shape complementing the section (21) of the insulation element (1) running along the longitudinal assembly edge (3) of the opposite assembly area (8).

5. Poly-functional insulation element (1) according to any one of Claims 1 to 4, **characterized in that** the or at least one adhesive strip (9) with peelable covering (14) comprises a measurement scale (15).

6. Poly-functional insulation element (1) according to any one of Claims 1 to 5, **characterized in that** the thermally conductive covering sheets (19 and 20) and the core (16) are joined together by assembly lines (6) called longitudinal assembly lines, each assembly area (7 and 8) running between a free longitudinal edge (2 and 3) of the insulation element (1) and an assembly line (6) of the said element (1).

7. Poly-functional insulation element (1) according to any one of Claims 1 to 5, **characterized in that** the core (16) is formed from a plurality of layers (17 and 18) of material which are stuck by their opposite faces or separated by an air gap.

8. Poly-functional insulation element (1) according to Claim 7, **characterized in that** the core (16) comprises at least two layers (17) of synthetic material with bubbles, between which a layer (18) of foam made of a synthetic material, preferably flame-retarded, can be interposed.

9. Insulating covering of the type formed from at least two poly-functional insulation elements according to any one of Claims 1 to 8, **characterized in that** the said insulation elements (1) are assembled with each other by means of partial overlap assembly by nesting.

## Patentansprüche

1. Mehrfunktionsisolationselement (1), insbesondere zur Wärmedämmung, das insbesondere als Platte oder Bahn vorliegt, wobei das Element (1), das dafür vorgesehen ist, an mindestens einer (2, 3) seiner Kanten (2, 3, 4, 5), als Verbindungslängskante bezeichnet, mit mindestens einem gleichartigen Element (1') einander teilweise überdeckend verbunden zu werden, von zwei Beschichtungsfolien (19, 20) aus einem leitenden und reflektierenden Material, wie eine metallische oder metallisierte Beschichtung, gebildet wird, zwischen denen eine Füllung (16) aus einem Isolierstoff angeordnet ist, wobei Füllung (16) und Beschichtungsfolien (19, 20) im übereinandergelegten Zustand von geeigneten Verbindungsmitteln miteinander verbunden werden, und wobei in mindestens einem (7) der Bereiche (7, 8) zur Verbindung des Isolationselementes (1) mit einem benachbarten gleichartigen Isolationselement (1') der Abschnitt (21) des Isolationselementes (1), der sich entlang der Verbindungslängskante (2) erstreckt, mindestens eine als durchgehende Längsnut bezeichnete Nut (10) umfasst, die sich von einer Querkante (4) des Isolationselementes (1) zu der gegenüberliegenden Querkante (5) erstreckt, wobei die Nut (10), die an jedem ihrer Enden offen ist und deren Längsachse parallel zu der Verbindungslängskante (2) verläuft, eine Aufnahme für mindestens einen Abschnitt der Kante (2') zur Verbindung des benachbarten gleichartigen Isolationselementes (1') bildet, der über die Dicke der Kante (2') aufgenommen wird, um einander überdeckend ineinandergesteckt zu werden, wobei mindestens eine (12) der Flanken (12, 13) der Nut (10) von der Beschichtungsfolie (19) auf einer der Seiten des Isolationselementes (1) gebildet wird, um den Strom- und Wärmedurchgang zwischen den Isolationselementen (1, 1') im verbundenen Zustand der Elemente (1, 1') sicherzustellen, **dadurch gekennzeichnet, dass** mindestens einer (7) der Bereiche (7, 8) zur Verbindung des Isolationselementes (1) mit einem benachbarten gleichartigen Isolationselement (1') mit mindestens einem Klebestreifen (9) mit abziehbarem Schutzstreifen (14) versehen ist, wobei der Klebestreifen (9), dessen Längsachse parallel zu der Verbindungslängskante (2) des Bereiches (7) verläuft und der zwei einander gegenüberliegende Querkanten (4, 5) des Isolationselementes (1) miteinander verbindet, als Verbindung mit Teilüberdeckung des Elementes (1) mit einem benachbarten gleichartigen Isolationselement (1') dienend.

2. Mehrfunktionsisolationselement (1) nach Anspruch 1, **dadurch gekennzeichnet, dass** jede Flanke (12, 13) der Nut (10) von der Beschichtungsfolie (19, 20) auf einer der Seiten des Elementes (1) gebildet wird.

3. Mehrfunktionsisolationselement (1) nach Anspruch 1, **dadurch gekennzeichnet, dass** der Boden (11) der Nut (10) ein gerades oder gestuftes Profil, insbesondere ein Rippen- oder Treppenprofil, aufweist.

4. Mehrfunktionsisolationselement (1) nach Anspruch 1, wobei das Isolationselement (1) mindestens zwei freie parallele Verbindungslängskanten (2, 3) und mindestens zwei Bereiche (7, 8) zur Verbindung mit einem benachbarten gleichartigen Isolationselement (1') umfasst, die jeweils in der Nähe einer Verbindungslängskante angeordnet sind, **dadurch gekennzeichnet, dass** der Abschnitt (21) des Isolationselementes (1), der sich entlang der Verbindungslängskante (2) eines (7) der Verbindungsbereiche (7, 8) erstreckt, ein Profil aufweist, das komplementär zu dem Abschnitt (21) des Isolationselementes (1) ausgebildet ist, der sich entlang der Verbindungslängskante (3) des gegenüberliegenden Verbindungsbereiches (8) erstreckt.

5. Mehrfunktionsisolationselement (1) nach einem der Ansprüche 1 bis 4, **dadurch gekennzeichnet, dass** der oder mindestens eine Haftstreifen (9) mit abziehbarem Schutzstreifen (14) eine Messskala (15) umfasst.

6. Mehrfunktionsisolationselement (1) nach einem der Ansprüche 1 bis 5, **dadurch gekennzeichnet, dass** die wärmeleitfähigen Beschichtungsfolien (19, 20) und die Füllung (16) über Verbindungsnähte (6), als Längsverbindungsnähte bezeichnet, miteinander verbunden sind, wobei sich jeder Verbindungsbereich (7, 8) zwischen einer freien Längskante (2, 3) des Isolationselementes (1) und einer Verbindungsnaht (6) des Elementes (1) erstreckt.

7. Mehrfunktionsisolationselement (1) nach einem der Ansprüche 1 bis 5, **dadurch gekennzeichnet, dass** die Füllung (16) von einer Mehrzahl von Lagen (17, 18) eines Materials gebildet wird, die an ihren Außenseiten aneinander anliegen oder durch einen Luftspalt voneinander getrennt sind.

8. Mehrfunktionsisolationselement (1) nach Anspruch 7, **dadurch gekennzeichnet, dass** die Füllung (16) mindestens zwei Lagen (17) eines Luftpolsterkunststoffes umfasst, zwischen die eine Lage (18) aus einem vorzugsweise schwer entflammbaren Kunstschaumstoff gelegt werden kann.

9. Isolierbeschichtung aus mindestens zwei Mehrfunktionsisolationselementen nach einem der Ansprüche 1 bis 8, **dadurch gekennzeichnet, dass** die Isolationselemente (1) einander teilweise überdeckend ineinandergesteckt sind.
